# EUROPEAN PATENT SPECIFICATION

(11) **EP 1 818 354 B1**
(45) Date of publication and mention of the grant of the patent: **20.10.2010**
(21) Application number: 07101321.3
(22) Date of filing: 29.01.2007
(51) Int. Cl.: C08G 73/10, G02F 1/1337, C09K 19/56

(54) **Liquid crystal aligning agent, alignment film and liquid crystal display device**
Flüssigkristallausrichtungsmittel, Ausrichtungsfolie und Flüssigkristallanzeigevorrichtung
Agent d'alignement des cristaux liquides, pellicule d'alignement des cristaux liquides et écran à cristaux liquides

(30) Priority: 30.01.2006 JP 2006021199
(43) Date of publication of application: 15.08.2007
(73) Proprietor: JSR Corporation, Tokyo 104-0045 (JP)
(72) Inventor: Nakata, Shoichi, Tokyo Tokyo 104-0045 (JP); Nishikawa, Michinori, Tokyo Tokyo 104-0045 (JP)
(74) Representative: TBK-Patent

(56) References cited:
- EP-A- 1 336 636
- US-A- 5 976 640
- US-B1- 6 224 788

## Description

### Field of the Invention

The present invention relates to a liquid crystal aligning agent, a liquid crystal alignment film and a liquid crystal display device. More specifically, it relates to a liquid crystal aligning agent which is used to form a liquid crystal alignment film able to be provided with liquid crystal alignability by applying polarized or non-polarized radiation thereto without rubbing, a liquid crystal alignment film and a liquid crystal display device having this liquid crystal alignment film.

### Description of the Prior Art

There has been known a liquid crystal display device having a liquid crystal cell such as a TN (Twisted Nematic), STN (Super Twisted Nematic) or IPS (In Plane Switching) liquid crystal cell which has a sandwich structure that nematic liquid crystals having positive dielectric anisotropy are sandwiched between substrates with a transparent electrode having a liquid crystal alignment film so that the long axes of liquid crystal molecules can be twisted at 0 to 360° continuously between the substrates as required (refer to JP-A 56-91277 and JP-A 1-120528).

In this liquid crystal cell, in order to align the liquid crystals in a predetermined direction with respect to the surface of the substrate, a liquid crystal alignment film must be formed on the surface of the substrate. This liquid crystal alignment film is formed by rubbing the surface of an organic film formed on the surface of the substrate with a cloth material such as rayon (rubbing method). However, since dust or static electricity is apt to be generated in the process when the liquid crystal alignment film is formed by rubbing, dust adheres to the surface of the alignment film, thereby causing a display failure. Particularly in the case of a substrate having a TFT (Thin Film Transistor) device, the circuit destruction of the TFT device is caused by the generated static electricity, thereby reducing the yield. Further, in a liquid crystal display device which will become finer and finer in the future, as the surface of the substrate becomes uneven along with the increasing density of pixels, uniform rubbing is aimed at.

As alternative means of aligning liquid crystals in the liquid crystal cell, there is known an optical aligning method for providing liquid crystal alignability by applying polarized or non-polarized radiation to a photosensitive thin film made of polyvinyl cinnamate, polyimide or azobenzene derivative formed on the surface of the substrate. According to this method, uniform liquid crystal alignment can be realized without generating static electricity and dust (refer to JP-A 6-287453, JP-A 10-251646, JP-A 11-2815, JP-A 11-152475, JP-A 2000-144136, JP-A 2000-319510, JP-A 2000-281724, JP-A 9-297313, JP-A 2003-307736, JP-A 2004-163646 and JP-A 2002-250924).

EP 1 336 636 A1 discloses an alignment film, which is formed from a liquid crystal aligning agent containing a polymer having a polyamic acid ester structure with a conjugated enone structure in the side chain and applying radiation to it from a predetermined direction.

In a TN (Twisted Nematic) or STN (Super Twisted Nematic) liquid crystal cell, the liquid crystal alignment film must have a pretilt angle for aligning liquid crystal molecules at a predetermined angle with respect to the surface of the substrate. When the liquid crystal alignment film is to be formed by the optical aligning method, the pretilt angle is generally provided by inclining the direction of radiation applied to the surface of the substrate from the normal of the substrate.

As an operation mode of a liquid crystal display device different from the above liquid crystal display device, there is known a homeotropic alignment mode for aligning liquid crystal molecules having negative dielectric anisotropy in a direction perpendicular to the substrate. In this operation mode, the liquid crystal molecules must be tilted from the normal direction of the substrate toward one direction within the plane of the substrate when the liquid crystal molecules are tilted in a direction parallel to the substrate by applying voltage between the substrates. As means for this, there are proposed a method in which a projection is formed on the surface of the substrate, a method in which a stripe is formed on a transparent electrode and a method in which liquid crystal molecules are slightly pretilted from the normal direction of the substrate toward one direction within the plane of the substrate by using a rubbed alignment film.

It is known that the above optical aligning method is useful for controlling the tilt direction of the liquid crystal molecules in the liquid crystal cell of a homeotropic alignment mode. That is, it is known that the inclination direction of the liquid crystal molecules at the time of applying voltage can be uniformly controlled by using a homeotropic alignment film provided with aligning force and a pretilt angle by the optical aligning method (refer to JP-A 2003-307736, JP-A 2004-163646, JP-A 2004-83810, JP-A 9-211468 and JP-A 2003-114437).

The liquid crystal alignment film manufactured by the above optical aligning method can be effectively used in various types of liquid crystal display devices. However, the optical alignment film of the prior art has a problem that the dose of radiation required to obtain a large pretilt angle is large. For example, it is reported that, in an optical alignment film containing an azobenzene derivative, 1 J/cm² or more of radiation whose optical axis is inclined from the normal of the substrate must be applied to obtain a sufficiently large pretilt angle (refer to JP-A 2002-250924, JP-A 2004-83810 and J. of the SID 11/3, 2003, p. 579).

### Summary of the Invention

It is an object of the present invention to provide a liquid crystal aligning agent (may also be referred to as "optical aligning agent" hereinafter) which is used to form a liquid crystal alignment film able to be provided with liquid crystal alignability by applying polarized or non-polarized radiation thereto without rubbing.

It is another object of the present invention to provide a liquid crystal aligning agent which is used to form a liquid crystal alignment film having a small dose of radiation required to provide a pretilt angle.

It is still another object of the present invention to provide a liquid crystal alignment film.

It is a further object of the present invention to provide a liquid crystal display device.

Other objects and advantages of the present invention will become apparent from the following description.

According to the present invention, firstly, the above objects and advantages of the present invention are attained by an optical aligning agent comprising a polymer having in the side chain at least one structure selected from the group consisting of structures represented by the following formulas (I), (II), (III) and (IV):

-p¹-CR¹=CR²-CO-D¹-L¹-S¹ (I)

-p²-CR³=CR⁴-CO-Q²-L²-S² (II)

-D³-CO-CR⁵=CR⁶-P³-L³-S³ (III)

-Q⁴-CO-CR⁷=CR⁸-P⁴-L⁴-S⁴ (IV)

wherein p¹, p², p³, p⁴, Q² and Q⁴ are each independently a divalent aromatic group or unsaturated heterocyclic group which may be substituted by a halogen or organic group, D¹ and D³ are each independently an oxygen atom or NR (R is a hydrogen atom or alkyl group having 12 or less carbon atoms), S¹, S², S³ and S⁴ are each independently a monovalent organic group having a condensation alicyclic group having 11 to 30 carbon atoms, L¹, L², L³ and L⁴ are each independently a single bond or divalent bonded group, and R¹ , R², R³, R⁴ , R⁵, R⁶, R⁷ and R⁸ are each independently a hydrogen atom or alkyl group having 12 or less carbon atoms.

The above objects and advantages are attained by a liquid crystal alignment film which is prepared by applying polarized or non-polarized radiation to a thin film made of the above optical aligning agent to make the thin film have liquid crystal alignability-

According to the present invention, thirdly, the above objects and advantages of the present invention are attained by a liquid crystal alignment film which is prepared by applying polarized or non-polarized radiation to a thin film having both of the following characteristic properties (a) and (b) to make the thin film have liquid crystal alignability;
(a) when polarized radiation is applied from the normal direction of a substrate, liquid crystal alignability is provided in a direction perpendicular to the axis of polarization; and
(b) when polarized radiation is applied from a direction inclined from the normal of the substrate in such a manner that the axis of polarization is existent within the plane formed by the normal of the substrate and the axis of incidence of radiation, liquid crystal alignability is provided in a direction inclined from the normal of the substrate toward the axis of incidence.
   The above objects and advantages are attained by a liquid crystal alignment film which is provided with liquid crystal alignability by applying polarized or non-polarized radiation to a thin film having the following characteristic property (c) in addition to the above characteristic properties (a) and (b):
(c) when non-polarized radiation is applied from a direction inclined from the normal of the substrate, liquid crystal alignability is provided in a direction inclined from the normal of the substrate toward the axis of incidence of radiation.
   According to the present invention, in the third place, the above objects and advantages of the present invention are attained by a liquid crystal display device having the above liquid crystal alignment film.

### Brief Description of the Drawings

Fig. 1 is a diagram showing the aligning direction of liquid crystal molecules when polarized radiation is applied to a thin film of the polymer of the present invention formed on a substrate from a direction inclined from the normal direction of the substrate in such a manner that the axis of polarization is existent within the plane formed by the normal of the substrate and the axis of incidence of radiation;
Fig. 2 is a diagram showing the aligning direction of liquid crystal molecules when non-polarized radiation is applied to a thin film of the polymer of the present invention formed on a substrate from a direction inclined from the normal of the substrate; and
Fig. 3 is a diagram showing the aligning direction of liquid crystal molecules when polarized radiation is applied to a thin film of the polymer of the present invention formed on a substrate from the normal direction of the substrate.

### Detailed Description of the Preferred Embodiments

The present invention will be described in detail hereinudner.

The optical aligning agent of the present invention contains a polymer having a cinnamic acid derivative structure to which a bulky structure is bonded or a conjugated enene structure to which a bulky structure is bonded (to be also referred to as "specific structure" hereinafter) in the side chain. When radiation is applied to a thin film containing this specific structure, the cinnamic acid derivative structure or the conjugated enene structure reacts to radiation to form crosslinking, and the bonded bulky structure is aligned in a predetermined direction which is determined by the polarization axis of radiation and/or the optical axis. The term "react" means that an electron absorbs light energy by the application of radiation to be excited, thereby forming or dissociating a bond so that it returns to its original ground state. On the thus obtained liquid crystal alignment film, the liquid crystal aligning direction including a pretilt angle is controlled by the alignment of the above bulky structure.

The principle that the liquid crystal aligning direction including a pretilt angle is controlled by the application of radiation can be considered as follows.

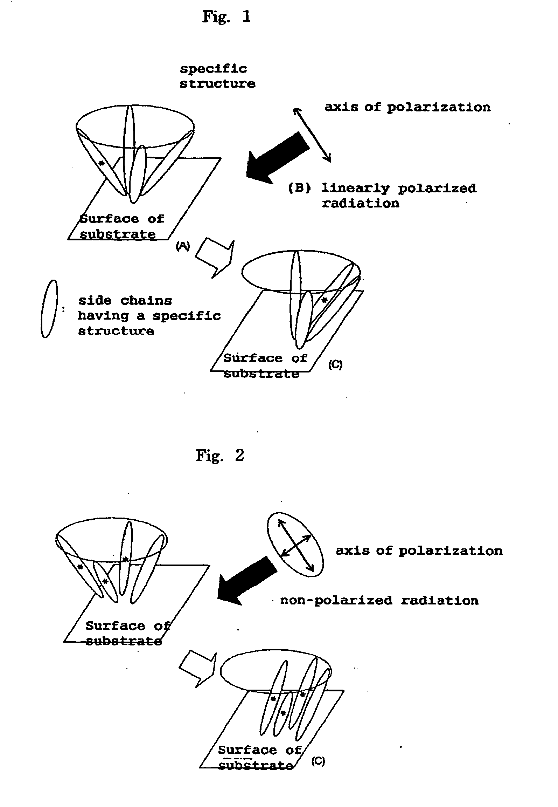

As shown in Fig. 1 (A), side chains having a specific structure are existent in different directions on the surface of a thin film of the polymer of the present invention, and the average direction is the normal direction of the surface of the substrate. When linearly polarized radiation shown in Fig. 1 (B) is applied to this thin film, a side chain (marked with an asterisk in the figure) parallel to the axis of polarization is crosslinked to change its direction. Therefore, the average direction of the side chains changes to a direction inclined from the normal toward the incident direction of polarization as a result of irradiation as shown in Fig. 1 (C) . When liquid crystal molecules are brought into contact with the liquid crystal alignment film formed as described above, as the aligning direction of the liquid crystal molecules is controlled by the average direction of the side chains, liquid crystal alignment in a direction inclined from the normal of the substrate toward the incident direction of polarization is achieved. That is, this liquid crystal alignment film has liquid crystal alignability in a direction inclined from the normal of the substrate toward the incident direction of polarization.

When non-polarized radiation is applied to a thin film of the polymer of the present invention as shown in Fig. 2, side chains marked with an asterisk in the figure change their directions, thereby obtaining a liquid crystal alignment film having easy axis in a direction inclined from the normal of the substrate toward the incident direction of non-polarized radiation.

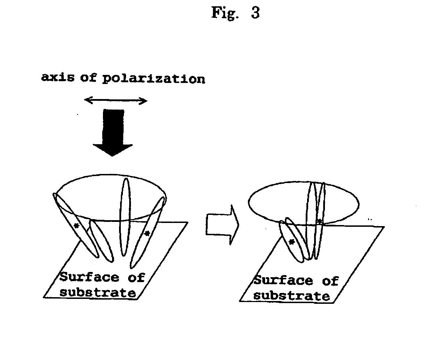

Meanwhile, when linearly polarized radiation is applied to the thin film from the normal direction as shown in Fig. 3, side chains marked with an asterisk in the figure change their directions, whereby a side chain distribution becomes such that the side chains concentrate in a direction perpendicular to the axis of polarization within the plane of the substrate. Therefore, the obtained liquid crystal alignment film has easy axis in a direction perpendicular to the axis of polarization.

The above specific structure is any one of the structures represented by the above formulas (I), (II), (III) and (IV).

Out of the above formulas (I), (II), (III) and (IV), structures represented by S¹, S², S³ and S⁴ correspond to the above bulky structure, specifically an organic group including a condensation alicyclic group having 11 to 30 carbon atoms. The condensation alicyclic group is a group composed of two or more aliphatic rings which may be the same or different and cannot be divided into two parts by cutting a single covalent bond in the group. Preferred examples of the organic group include a group having a perhydroanthracene structure, a group having a steroid skeleton and a group having a cyclic triterpene skeleton. Out of these, the group having a steroid skeleton and the group having a cyclic triterpene skeleton are preferred.

In the above formulas (I), (II), (III) and (IV), L¹, L², L³ and L⁴ are each independently a single bond or divalent bonded group. Specific examples of the bonded group include ether bond, ester bond, amide bond, urethane bond, urea bond, methylene group, ethylene group, trimethylene group, hexamethylene group and propylene group. Out of these, single bond, ether bond and ester bond are preferred, and single bond is particularly preferred.

The remainder after L¹ and S¹ are removed from the structure represented by the above formula (I) and the remainder after L³ and S³ are removed from the structure represented by the above formula (III) correspond to a cinnamic acid derivative structure.

The remainder after L² and S² are removed from the structure represented by the above formula (II) and the remainder after L⁴ and S⁴ are removed form the structure represented by the above formula (IV) correspond to a conjugated enene structure. In these formulas, P¹, P², P³, P⁴, Q² and Q⁴ are each independently a divalent aromatic group or unsaturated heterocyclic group which may be substituted by a halogen or organic group.

Examples of the divalent aromatic group represented by P¹, P², P³, P⁴, Q² and Q⁴ include 1,2-phenylene group, 3-fluoro-1,2-phenylene group, 4-fluoro-1,2-phenylene group, 3-methoxy-1,2-phenylene group, 4-methoxy-1,2-phenylene group, 3-methyl-1,2-phenylene group, 4-methyl-1,2-phenylene group, 1,3-phenylene group, 2-fluoro-1,3-phenylene group, 4-fluoro-1,3-phenylene group, 5-fluoro-1,3-phenylene group, 2-methoxy-1,3-phenylene group, 4-methoxy-1,3-phenylene group, 5-methoxy-1,3-phenylene group, 2-methyl-1,3-phenylene group, 4-methyl-1,3-phenylene group, 5-methyl-1,3-phenylene group, 1,4-phenylene group, 2-fluoro-1,4-phenylene group, 2-methoxy-1,4-phenylene group, 2-methyl-1,4-phenylene group, 4,4'-biphenylene group, 3,4'-biphenylene group, 3,3'-biphenylene group, 1,4-naphthylene group and 2,6-naphthylene group. Examples of the divalent unsaturated heterocyclic group include pyrimidine-2,5-diyl group, pyridine-2,5-diyl group, 2,5-thiophenylene group and 2,5-furanylene group. Out of these, 1,4-phenylene group and 2-methoxy-1,4-phenylene group are preferred.

D¹ and D³ are each independently an oxygen atom or NR (R is a hydrogen atom or alkyl group having 12 or less carbon atoms), preferably oxygen atom or NH, particularly preferably oxygen atom. R¹, R², R³, R⁴, R⁵, R⁶, R⁷ and R⁸ are each independently a hydrogen atom or alkyl group having 12 or less carbon atoms, preferably hydrogen atom or methyl group, particularly preferably hydrogen atom. Out of these specific structures, particularly preferred is an organic group represented by at least one structure selected from the following formulas (V-1) to (V-7) (to be referred to as "oryzanyl group" hereinafter).

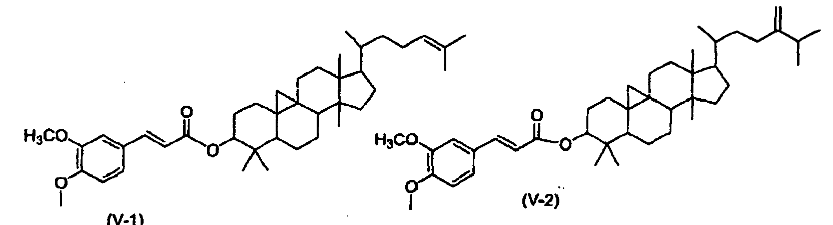

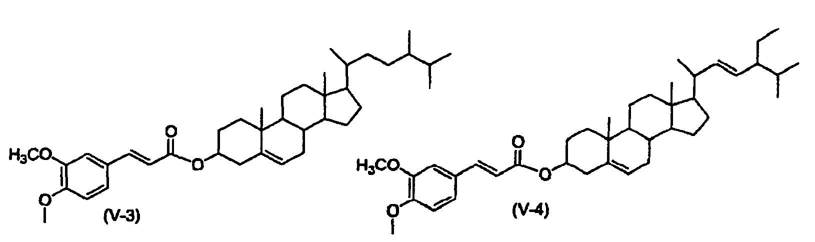

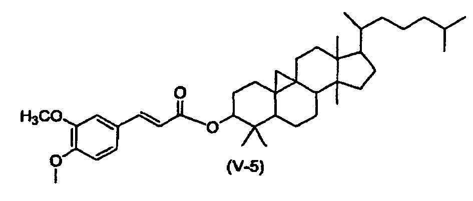

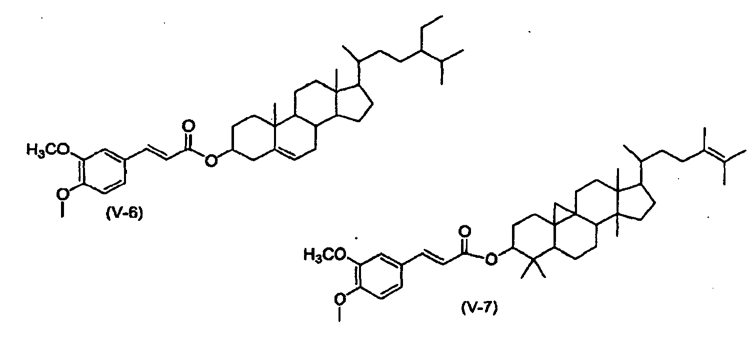

The polymer constituting the liquid crystal aligning agent of the present invention is a polymer having the above specific structure in the side chain. The recurring unit having the above specific structure accounts for preferably 10 to 100 %, particularly preferably 30 to 90 % of to the total of all the recurring units in the polymer.

The skeleton of the polymer used in the present invention is not particularly limited, as exemplified by a polyamic acid, polyimide, polyamic acid ester, polyester, polyamide, polysiloxane, cellulose derivative, polyacetal, polystyrene derivative, poly(styrene-phenylmaleimide) derivative and poly(meth)acrylate. A polyamic acid, polyimide, polyamic acid ester, polystyrene derivative and poly(styrene-phenylmaleimide)derivative are preferred, polyamic acid ester, polyamic acid and polyimide are more preferred, and polyamic acid and polyimide are particularly preferred because they have excellent heat resistance.

### Polyamic acid, polyimide, polyamic acid ester

A polyamic acid is obtained by reacting a tetracarboxylic dianhydride with a diamine compound. A polyimide is obtained by the dehydration ring-closure of the above polyamic acid. A compound having the above specific structure is used as at least one component out of the tetracarboxylic dianhydride and the diamine compound in the synthesis of a polyamic acid or polyimide used as the polymer contained in the optical aligning agent of the present invention. A compound having the above specific structure is preferably used as the diamine compound.

A polyamic acid ester is obtained by reacting the above polyamic acid with an organic halide, alcohol or phenol. In the polyamic acid ester used as the specific polymer of the present invention, the specific structure may be contained in at least one of the tetracarboxylic dianhydride and the diamine compound or in the organic halide, alcohol or phenol. The specific structure is preferably contained in the organic halide, alcohol or phenol.

Examples of the tetracarboxylic dianhydride having the specific structure include
1,3,3a,4,5,9b-hexahydro-8-(oryzanyloxy)-5-(tetrahydro-2, 5-dioxo-3-furanyl)-naphtho[1,2-c]furan-1,3-dione,
1,3,3a,4,5,9b-hexahydro-8-(2(oryzanyloxy)ethoxy)-5-(tetrahydro-2,5-dioxo-3-furanyl)-naphtho[1,2-c]furan-1,3-dione,
1,3,3a,4,5,9b-hexahydro-8-(6(oryzanyloxy)hexyloxy)-5-(tetrahydro-2,5-dioxo-3-furanyl)-naphtho[1,2-c]furan-1,3-dione,
1,3,3a,4,5,9b-hexahydro-8-(4'(3-cholestanyloxy)4-chalconyloxy)-5-(tetrahydro-2,5-dioxo-3-furanyl)-naphtho[1,2-c]furan-1,3-dione,
1,3,3a,4,5,9b-hexahydro-8-(4'(3-cholesteryloxy)4-chalconyloxy)-5-(tetrahydro-2,5-dioxo-3-furanyl)-naphtho[1,2-c]furan-1,3-dione,
1,3,3a,4,5,9b-hexahydro-8-(4(3-cholestanyloxy) cinnamoyloxy)-5-(tetrahydro-2,5-dioxo-3-furanyl)-naphtho[1,2-c]furan-1,3-dione,
1,3,3a,4,5,9b-hexahydro-8-(4(3-cholesteryloxy) cinnamoyloxy)-5-(tetrahydro-2,5-dioxo-3-furanyl)-naphtho[1,2-c]furan-1,3-dione,
1,3,3a,4,5,9b-hexahydro-8-(4(3-cholestanyloxy)4'-chalconyloxy)-5-(tetrahydro-2,5-dioxo-3-furanyl)-naphtho[1,2-c]furan-1,3-dione and
1,3,3a,4,5,9b-hexahydro-8-(4(3-cholesteryloxy)4'-chalconyloxy)-5-(tetrahydro-2,5-dioxo-3-furanyl)-naphtho[1,2-c]furan-1,3-dione. They may be used alone or in combination of two or more. Out of these,
1,3,3a,4,5,9b-hexahydro-8-(2(oryzanyloxy)ethoxy)-5-(tetrahydro-2,5-dioxo-3-furanyl)-naphtho[1,2-c]furan-1,3-dione and
1,3,3a,4,5,9b-hexahydro-8-(6(oryzanylaxy)hexyloxy)-5-(te trahydro-2,5-dioxo-3-furanyl)-naphtho[1,2-c]furan-1,3-di one are preferred.

Examples of the diamine compound having the specific structure include compounds represented by the following formulas (VI-1) to (VI-7), oryzanyl(3,5-diaminobenzoate),
oryzanyl(3,5-diaminobenzoate),
2-(oryzanyloxy)ethyl(3,5-diaminobenzoate),
oryzanyl(2-(2,4-diaminophenoxy)acetate),
6-(oryzanyloxy)hexyl(3,5-diaminobenzoate),
1,3-diamino-4-(oryzanyloxy)benzene,
1,3-diamino-4-(2(oryzanyloxy)ethoxy)benzene,
1,3-diamino-4-(6(oryzanyloxy)hexyloxy)benzene,
3-cholesteryl-4-(3,5-diaminobenzoyloxy)cinnamate,
3-cholestanyl-4-(3,5-diaminobenzoyloxy)cinnamate,
3-cholesteryl-4-(2(3,5-diaminobenzoyloxy)ethoxy) cinnamate,
3-cholestanyl-4-(2(3,5-diaminobenzoyloxy)ethoxy) cinnamate,
3-cholesteryl-4-(6(3,5-diaminobenzoyloxy)hexyloxy) cinnamate,
3-cholestanyl-4-(6(3,5-diaminobenzoyloxy)hexyloxy) cinnamate, 3-cholesteryl-4-(2,4-diaminophenoxy)cinnamate,
3-cholestanyl-4-(2,4-diaminophenoxy)cinnamate,
3-cholesteryl-4-(2(2,4-diaminophenoxy)ethoxy)cinnamate,
3-cholestanyl-4-(2(2,4-diaminophenoxy)ethoxy)cinnamate,
3-cholesteryl-4-(6(2,4-diaminophenoxy)hexyloxy)cinnamate,
3-cholestanyl-4-(6(2,4-diaminophenoxy)hexyloxy)cinnamate,
4'-(3-cholesteryloxy)-4-(3,5-diaminobenzoyloxy)chalcone,
4'-(3-cholestanyloxy)-4-(3,5-diaminobenzoyloxy)chalcone,
4'-(3-cholesteryloxy)-4-(2(3,5-diaminobenzoyloxy)ethoxy) chalcone,
4'-(3-cholestanyloxy)-4-(2(3,5-diaminobenzoyloxy)ethoxy) chalcone,
4'-(3-cholesteryloxy)-4(6(3,5-diaminobenzoyloxy) hexyloxy)chalcone,
4'-(3-cholestanyloxy)-4(6(3,5-diaminobenzoyloxy) hexyloxy)chalcone,
4'-(3-cholesteryloxy)-4-(2,4-diaminophenoxy)chalcone,
4'-(3-cholestanyloxy)-4-(2,4-diaminophenoxy)chalcone,
4'-(3-cholesteryloxy)-4-(2(2,4-diaminophenoxy)ethoxy) chalcone,
4'-(3-cholestanyloxy)-4-(2(2,4-diaminophenoxy)ethoxy) chalcone,
4'-(3-cholesteryloxy)-4-(6(2,4-diaminophenoxy)hexyloxy) chalcone,
4'-(3-cholestanyloxy)-4-(6(2,4-diaminophenoxy)hexyloxy) chalcone,
(2(3,5-diaminobenzoyloxy)ethyl)-4-(3-cholesteryloxy) cinnamate,
(2(3,5-diaminobenzoyloxy)ethyl)-4-(3-cholestanyloxy) cinnamate,
(6(3,5-diaminobenzoyloxy)hexyl)-4-(3-cholesteryloxy) cinnamate,
(6(3,5-diaminobenzoyloxy)hexyl)-4-(3-cholestanyloxy) cinnamate,
(2,4-diaminophenyl)-4-(3-cholesteryloxy)cinnamate,
(2,4-diaminophenyl)-4-(3-cholestanyloxy)cinnamate,
(2 (2, 4-diaminophenoxy) ethyl) -4- (3-cholesteryloxy) cinnamate,
(2(2,4-diaminophenoxy)ethyl)-4-(3-cholestanyloxy) cinnamate,
(6(2,4-diaminophenoxy)hexyl)-4-(3-cholesteryloxy) cinnamate,
(6(2,4-diaminophenoxy)hexyl)-4-(3-cholestanyloxy) cinnamate,
4-(3-cholesteryloxy)-4'-(3,5-diaminobenzoyloxy)chalcone,
4-(3-cholestanyloxy)-4'-(3,5-diaminobenzoyloxy)chalcone,
4-(3-cholesteryloxy).-4'-(2(3,5-diaminobenzoyloxy)ethoxy) chalcone,
4-(3-cholestanyloxy)-4'-(2(3,5-diaminobenzoyloxy)ethoxy) chalcone,
4-(3-cholesteryloxy)-4'-(6(3,5-diaminobenzoyloxy) hexyloxy)chalcone,
4-(3-cholestanylaxy)-4'-(6(3,5-diaminobenzoyloxy) hexyloxy)chalcone,
4-(3-cholesteryloxy)-4'-(2,4-diaminophenoxy)chalcone,
4-(3-cholestanyloxy)-4'-(2,4-diaminophenoxy)chalcone,
4-(3-cholesteryloxy)-4'-(2(2,4-diaminophenoxy)ethoxy) chalcone,
4-(3-cholestanyloxy)-4'-(2(2,4-diaminophenoxy)ethoxy) chalcone,
4- (3-cholesteryloxy) -4' - (6 (2, 4-diaminophenoxy) hexyloxy) chalcone and
4-(3-cholestanyloxy)-4'-(6(2,4-diaminophenoxy)hexyloxy) chalcone. 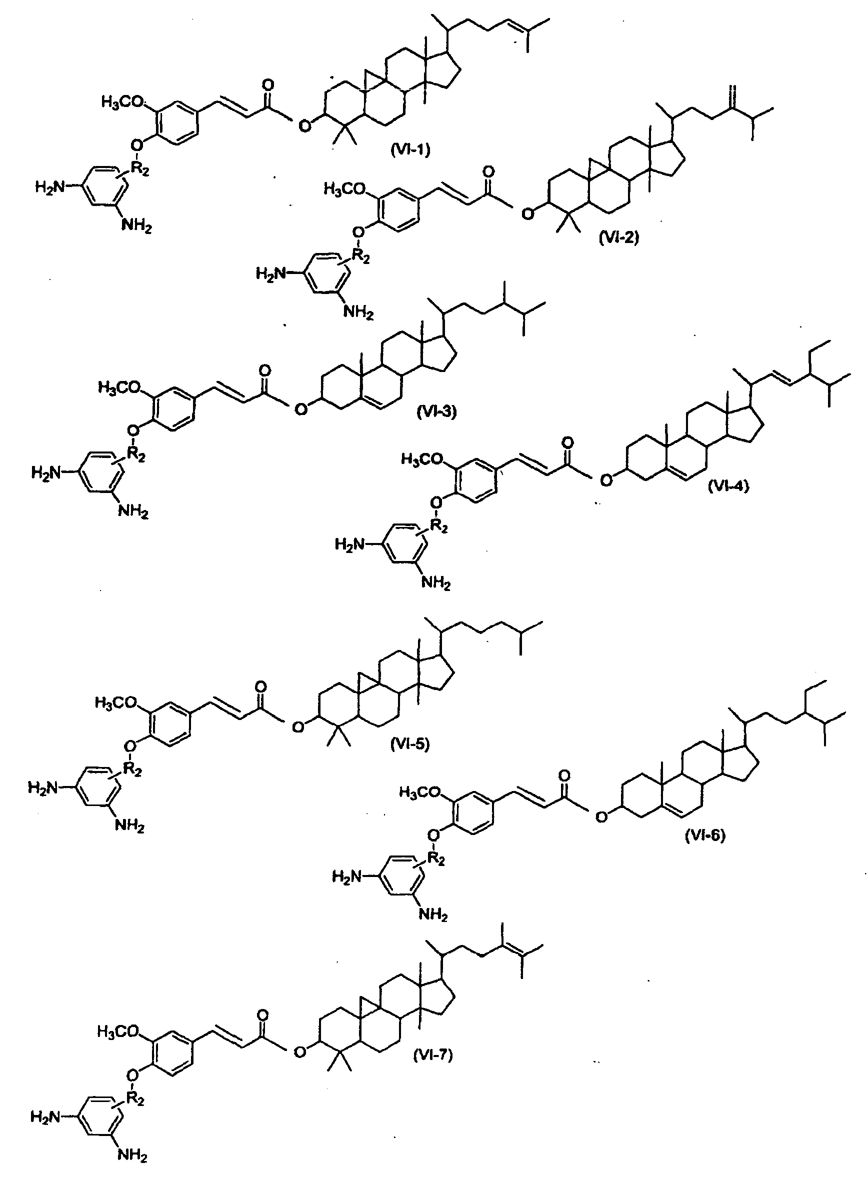 wherein R₂ is a single bond, divalent bonded group or organic group.

They may be used alone or in combination of two or more.

Out of these, oryzanyl(3,5-diaminobenzoate), oryzanyl(2-(2,4-diaminophenoxy)acetate),
2-(oryzanyloxy)ethyl(3,5-diaminobenzoate),
oryzanyl(2-(2,4-diaminophenoxy)acetate),
6-(oryzanyloxy)hexyl(3,5-diaminobenzoate),
1,3-diamino-4-(2(oryzanyloxy)ethoxy)benzene,
1,3-diamino-4-(6(oryzanyloxy)hexyloxy)benzene,
(2(3,5-diaminobenzoyloxy)ethyl)-4-(3-cholesteryloxy) cinnamate,
(2(3,5-diaminobenzoyloxy)ethyl)-4-(3-cholestanyloxy) cinnamate,
(6(3,5-diaminobenzoyloxy)hexyl)-4-(3-cholesteryloxy) cinnamate,
(6(3,5-diaminobenzoyloxy)hexyl)-4-(3-cholestanyloxy) cinnamate,
(2(2,4-diaminophenoxy)ethyl)-4-(3-cholesteryloxy) cinnamate,
(2(2,4-diaminophenoxy)ethyl)-4-(3-cholestanyloxy) cinnamate,
(6(2,4-diaminophenoxy)hexyl)-4-(3-Cholesteryloxy) cinnamate and
(6(2,4-diaminophenoxy)hexyl)-4-(3-cholestanyloxy) cinnamate are preferred, and oryzanyl (3,5-diaminobenzoate),
oryzanyl(2-(2,4-diaminophenoxy)acetate),
2-(oryzanyloxy)ethyl(3,5-diaminobenzoate),
6-(oryzanyloxy)hexyl(3,5-diaminobenzoate),
1,3-diamino-4-(2(oryzanyloxy)ethoxy)benzene and
1,3-diamino-4-(6(oryzanyloxy)hexyloxy)benzene are particularly preferred.

The diamine compounds having an oryzanyl group enumerated herein can be synthesized from natural γ-oryzanol by the method described in Japanese Patent Application No. 2006-13115, for example. The above diamine compounds are obtained as a mixture of diamine compounds having groups represented by the structures of the above formulas (V-1) to (V-7). In the present invention, it is particularly preferred to use the mixture of diamine compounds as it is.

In the synthesis of the above polyamic acid, other tetracarboxylic dianhydride and other diamine compound having no specific structure may be used in combination with the tetracarboxylic dianhydride and diamine compound having the specific structure to improve the properties thereof and to provide such a function as the development of a pretilt angle or homeotropic alignability.

Examples of the other tetracarboxylic dianhydride include compounds enumerated as "other tetracarboxylic dianhydride" and "tetracarboxylic dianhydride having a specific hydrophobic group" in the paragraphs [0039] to **[0042]** of JP-A 2004-163646. Out of these, preferred are
1,3,3a,4,5,9b-hexahydro-5-(tetrahydro-2,5-dioxo-3-furanyl)-naphtho[1,2-c]-furan-1,3-dione,
1,3,3a,4,5,9b-hexahydro-5-(tetrahydro-2,5-dioxo-3-furanyl)-8-methyl-naphtho[1,2-c]-furan-1,3-dione,
2,3,5-tricarboxycyclopentylacetic dianhydride,
butanetetracarboxylic dianhydride,
1,3-dimethy-1,2,3,4-cyclobutanetetracarboxylic dianhydride, 1,2,3,4-cyclobutanetetracarboxylic dianhydride, pyromellitic dianhydride,
3,3',4,4'-biphenylsulfonetetracarboxylic dianhydride,
1,4,5,8-naphthalenetetracarboxylic dianhydride,
2,3,6,7-naphthalenetetracarboxylic dianhydride,
3,3'4,4'-biphenyl ether tetracarboxylic dianhydride and compounds represented by the following formulas (1) to (4). They may be used alone or in combination of two or more.

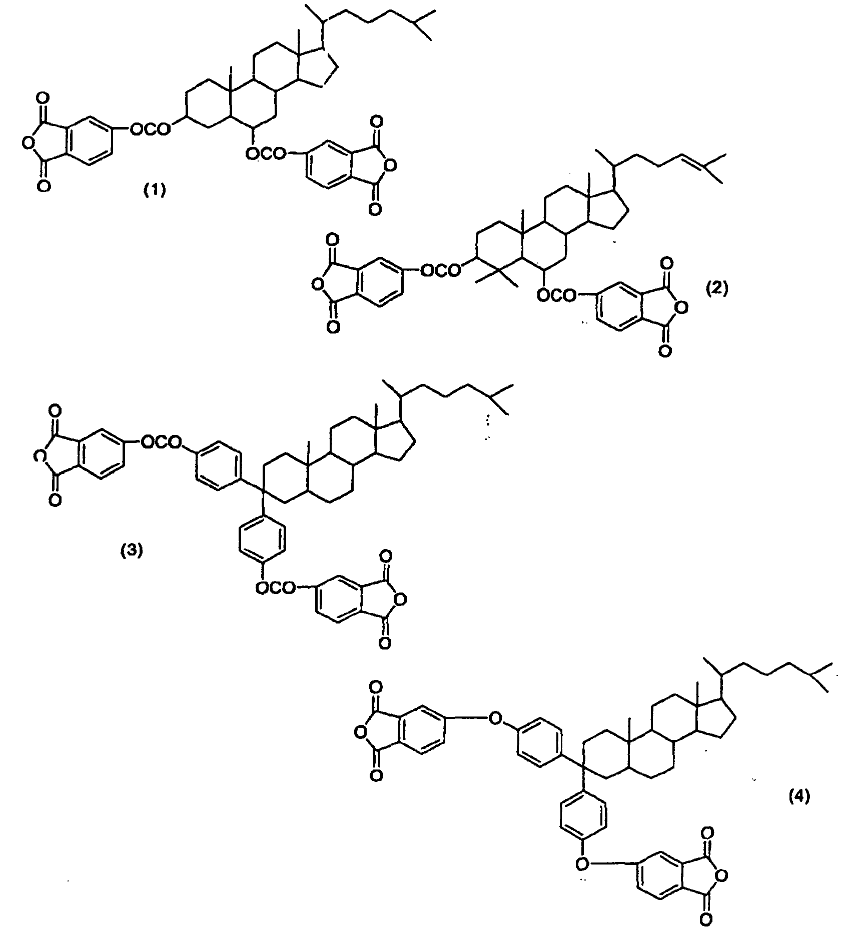

Examples of the other diamine compound include
6(4-chalconyloxy)hexyloxy(2,4-diaminobenzene),
6(4'-fluoro-4-chalconyloxy)hexyloxy(2,4-diaminobenzene),
8(4-chalconyloxy)octyloxy(2,4-diaminobenzene),
8(4'-fluoro-4-chalconyloxy)octyloxy(2,4-diaminobenzene)
and compounds enumerated as "other diamine compound" and "diamine compound having a specific hydrophobic group" in the paragraphs [0044] to [0046] of JP-A 2004-163646. Out of these, preferred are p-phenylenediamine,
4,4'-diaminodiphenylmethane, 1,5-diaminonaphthalene,
2,7-diaminofluorene, 4,4'-diaminodiphenyl ether,
4,4'-(p-phenyleneisopropylidene)bisaniline,
2,2-bis[4-(4-aminophenoxy)phenyl]hexafluoropropane,
2,2-bis(4-aminophenyl)hexafluoropropane,
2,2'-bis[4-(4-amino-2-trifluoromethylphenaxy)phenyl) hexafluoropropane,
4,4'-diamino-2,2'-bis(trifluoromethyl)biphenyl,
4,4'-bis[(4-amino-2-trifluoromethyl)phenoxy]-octafluorobiphenyl, 1-hexadecanoxy-2,4-diaminobenzene,
1-octadecanoxy-2,4-diaminobenzene,
1-cholesteryloxy-2,4-diaminobenzene,
1-cholestanyloxy-2,4-diaminobenzene,
hexadecanoxy(3,5-diamonbenzoyl),
octadecanoxy(3,5-diaminobenzoyl),
cholesteryloxy(3,5-diaminobenzoyl),
cholestanyloxy(3,5-diaminobenzoyl) and compounds represented by the following formulas (5) and (6). They may be used alone or in combination of two or more.

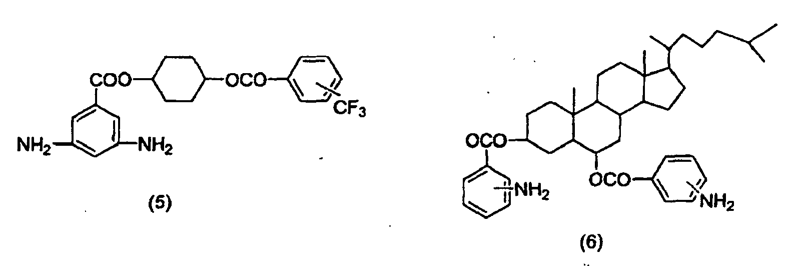

As for the ratio of the tetracarboxylic dianhydride to the diamine compound used in the synthesis reaction of the polyamic acid, the amount of the acid anhydride group of the tetracarboxylic dianhydride is preferably 0.2 to 2 equivalents, more preferably 0.3 to 1.2 equivalents based on 1 equivalent of the amino group contained in the diamine compound.

The synthesis reaction of the polyamic acid is carried out in an organic solvent at preferably -20 to 150°C, more preferably 0 to 100°C. The organic solvent is not particularly limited if it can dissolve the synthesized polyamic acid, as exemplified by aprotic polar solvents such as N-methyl-2-pyrrolidone, N,N-dimethylacetamide, N,N-dimethylformamide, N,N-dimethylimidazolidinone, dimethyl sulfoxide, γ-butyrolactone, tetramethylurea and hexamethylphosphoric triamide; and phenolic solvent such as m-cresol, xylenol, phenol and phenol halide. The amount (a) of the organic solvent is preferably such that the total amount (b) of the tetracarboxylic dianhydride and the diamine compound becomes 0.1 to 30 wt% of the whole amount (a + b) of the reaction solution.

An alcohol, ketone, ester, ether, hydrocarbon halide or hydrocarbon which is a poor solvent for the polyamic acid may be used as the above organic solvent as far as the formed polyamic acid does not separate out. Examples of the poor solvent include methyl alcohol, ethyl alcohol, isopropyl alcohol, cyclohexanol, ethylene glycol, propylene glycol, 1,4-butanediol, triethylene glycol, ethylene glycol monomethyl ether, ethyl lactate, butyl lactate, acetone, methyl ethyl ketone, methyl isobutyl ketone, cyclohexanone, methyl acetate, ethyl acetate, butyl acetate, methyl methoxypropionate, ethyl ethoxypropionate, diethyl oxalate, diethyl malonate, diethyl ether, ethylene glycol methyl ether, ethylene glycol ethyl ether, ethylene glycol-n-propyl ether, ethylene glycol-i-propyl ether, ethylene glycol-n-butyl ether, ethylene glycol dimethyl ether, ethylene glycol methyl ether acetate, diethylene glycol dimethyl ether, diethylene glycol diethyl ether, diethylene glycol monomethyl ether, diethylene glycol monoethyl ether, diethylene glycol monomethyl ether acetate, diethylene glycol monoethyl ether acetate, tetrahydrofuran, dichloromethane, 1,2-dichloroethane, 1,4-dichlorobutane, trichloroethane, chlorobenzene, p-dichlorobenzene, hexane, heptane, octane, benzene, toluene and xylene.

The reaction solution containing the polyamic acid is thus obtained. This reaction solution is injected into a large quantity of the poor solvent to obtain a precipitate which is then dried under reduced pressure to obtain the polyamic acid. The step of dissolving this product in the organic solvent again and precipitating it with the poor solvent is carried out once or a plurality of times to purify the reaction product.

The polyimide which is used in the present invention can be prepared by the dehydration ring-closure of the above polyamic acid. The dehydration ring-closure of the polyamic acid is carried out by (i) heating the polyamic acid or (ii) dissolving the polyamic acid in an organic solvent, adding a dehydrating agent and a dehydration ring-closing catalyst to this solution and heating it as required.

In the above method (i) in which the polyamic acid is heated, the reaction temperature is preferably 50 to 200°C, more preferably 60 to 170°C. When the reaction temperature is lower than 50°C, the dehydration ring-closure reaction does not proceed to the full and when the reaction temperature is higher than 200°C, the molecular weight of the obtained imidized polymer (polyamic acid) may become low.

Meanwhile, in the above method (ii) in which a dehydrating agent and a dehydration ring-closing catalyst are added to the solution of the polyamic acid, an acid anhydride such as acetic anhydride, propionic anhydride or trifluoroacetic anhydride may be used as the dehydrating agent. The amount of the dehydrating agent is preferably 0.01 to 20 mols based on 1 mol of the recurring unit of the polyamic acid. A tertiary amine such as pyridine, collidine, lutidine or triethylamine may be used as the dehydration ring-closing catalyst. However, the dehydration ring-closing agent is not limited to these. The amount of the dehydration ring-closing catalyst is preferably 0.01 to 10 mols based on 1 mol of the dehydrating agent in use. Examples of the organic solvent used in the dehydration ring-closure reaction are the above listed organic solvents used for the synthesis of the polyamic acid. The reaction temperature of the dehydration ring-closure reaction is preferably 0 to 180°C, more preferably 10 to 150°C. The same operation as that for the purification of the polyamic acid is carried out on the thus obtained reaction solution to purify the polyimide.

Examples of the tetracarboxylic dianhydride and the diamine compound used for the synthesis of a polyamic acid ester are compounds already enumerated as the above tetracarboxylic dianhydride and diamine compound. The tetracarboxylic dianhydride and the diamine compound used here may or may not have the specific structure.

Examples of the organic halide having the specific structure include bromides such as
1-bromo-2-(oryzanyloxy)ethane,
1-bromo-6-(oryzanyloxy)hexane,
(3-cholesteryl)-4-(2-bromoethoxy)cinnamate,
(3-cholestanyl)-4-(2-bromoethoxy)cinnamate,
(3-cholesteryl)-4-(6-bromohexyloxy)cinnamate,
(3-cholestanyl)-4-(6-bromohexyloxy)cinnamate,
4'-(2-bromoethoxy)-4-(3-cholesteryloxy)chalcone,
4'-(2-bromoethoxy)-4-(3-cholestanyloxy)chalcone,
4'-(6-bromohexyloxy)-4-(3-cholesteryloxy)chalcone,
4'-(6-bromohexyloxy)-4-(3-cholestanyloxy)chalcone,
(2-bromoethyl)-4-(3-cholesteryloxy)cinnamate,
(2-bromoethyl)-4-(3-cholestanyloxy)cinnamate,
(6-bromohexyl)-4-(3-cholesteryloxy)cinnamate,
(6-bromohexyl)-4-(3-cholestanyloxy)cinnamate,
4-(2-bromoethoxyl)-4'-(3-cholesteryloxy)chalcone,
4-(2-bromoethoxyl)-4'-(3-cholestanyloxy)chalcone,
4-(5-bromohexyloxy)-4'-(cholesteryloxy)chalcone and
4-(6-bromohexyloxy)-4'-(3-cholestanyloxy)chalcone, and corresponding fluorides, chlorides and iodides. They may be used alone or in combination of two or more.

Out of these halides, bromides and iodides are preferred, and bromides are particularly preferred as they have high reactivity.

Examples of the alcohol having the specific structure are compounds obtained by substituting the bromine atom of the above bromides having the specific structure by a hydroxyl group. They may be used alone or in combination of two or more.

Examples of the phenol having the specific structure include γ-oryzanol,
4'-hydroxy-4-(3-cholesteryloxy)chalcone,
4'-hydroxy-4-(3-cholestanyloxy)chalcone,
4-hydroxy-4'-(3-cholesteryloxy)chalcone and
4-hydroxy-4'-(3-cholestanyloxy)chalcone. They may be used alone or in combination of two or more.

In the synthesis of the polyamic acid ester, an organic halide, alcohol or phenol having no specific structure may be used in combination with the organic halide, alcohol or phenol having the specific structure to improve the properties of the polyamic acid ester and provide such a function as the development of a pretilt angle or homeotropic alignability.

Example of the other organic halide include cetyl bromide, stearyl bromide, methyl bromide, ethyl bromide, propyl bromide, cetyl chloride, stearyl chloride, methyl chloride, ethyl chloride, propyl chloride and 1,1,1-trifluoro-2-iodoethane.

Out of these, stearyl bromide, 1,1,1-trifluoro-2-iodoethane, acetyl chloride and stearoyl chloride are preferred. They may be used alone or in combination of two or more.

Examples of the other alcohol include cetyl alcohol, stearyl alcohol, 1,1,1-trifluoroethanol, methanol, ethanol, isopropanol and normal propanol.

Out of these, cetyl alcohol, stearyl alcohol and 1,1,1-trifluoroethanol are preferred. They may be used alone or in combination of two or more.

Examples of the other phenol include phenol, cresol, 4-cetyloxyphenol, 4-cetylphenol, 4-stearyloxyphenol, 4-stearylphenol and 4-trifluoromethylphenol. They may be used alone or in combination of two or more.

The above polyamic acid ester is obtained by polycondensing the above tetracarboxylic dianhydride component and diamine component to obtain a polyamic acid and reacting the polyamic acid with an organic halide, alcohol or phenol in the presence of a catalyst as required.

The method of synthesizing the polyamic acid used in the synthesis of the above polyamic acid ester may be identical to the above-described method of synthesizing a polyamic acid which is the specific polymer.

Examples of the catalyst used for a reaction between the polyamic acid and the organic halide include basic catalysts such as lithium hydroxide, sodium hydroxide, potassium hydroxide, lithium carbonate, sodium carbonate, potassium carbonate, sodium methoxide, potassium methoxide, sodium ethoxide, potassium ethoxide, sodium propoxide, potassium propoxide, sodium butoxide, potassium butoxide, trimethylamine, triethylamine and pyridine. Examples of the organic solvent used for this esterification reaction are the above listed organic solvents used for the synthesis of the polyamic acid.

Examples of the catalyst used for a reaction between the polyamic acid and the alcohol or phenol include dehydration catalysts such as dicyclohexylcarbodimide and methyl chloroformate. These dehydration catalysts may be optionally used in combination with a co-catalyst such as dimethylaminopyridine.

### Liquid crystal aligning agent

The liquid crystal aligning agent of the present invention is a solution containing the polymer having a specific structure in the side chain. The solvent used in the solution is not particularly limited if it is an organic solvent capable of dissolving the polymer. Examples of the solvent are the above listed organic solvents used for the synthesis of the polyamic acid. They may be used alone or in combination of two or more. The above listed poor solvents used for the synthesis of the polyamic acid may also be used. The composition of a preferred solvent is obtained by combining the above solvents and such that the polymer does not separate out in the aligning agent and the surface tension of the aligning agent becomes 25 to 40 mN/m.

The solid content of the liquid crystal aligning agent of the present invention is selected in consideration of viscosity and volatility. It is preferably in the range of 1 to 10 wt%. That is, the liquid crystal aligning agent of the present invention is applied to the surface of a substrate to form a coating film which will become a liquid crystal alignment film. When the solid content of the liquid crystal aligning agent is lower than 1 wt%, the thickness of the coating film becomes too small, thereby making it difficult to obtain a satisfactory liquid crystal alignment film. When the solid content is higher than 10 wt%, the thickness of the coating film becomes too large, thereby making it difficult to obtain a satisfactory liquid crystal alignment film, and the viscosity of the liquid crystal aligning agent increases with the result that coatability is apt to deteriorate.

The particularly preferred solid content differs according to means used to apply the liquid crystal aligning agent to the substrate. For example, when a spinner is used, the solid content is particularly preferably 1.5 to 4.5 wt%. When printing is used, the solid content is particularly preferably 3 to 9 wt%, thereby setting the solution viscosity to 12 to 50 mPa·s. When ink jet coating is used, the solid content is particularly preferably 1 to 5 wt%, thereby setting the solution viscosity to 3 to 15 mPa·s.

The temperature for preparing the liquid crystal aligning agent of the present invention is preferably 0 to 200°C, more preferably 20 to 60°C.

### Other additives

The liquid crystal aligning agent of the present invention may contain a polymer having no specific structure to improve its solution properties and electric properties. Examples of the polymer include a polyamic acid, polyimide, polyamic acid ester, polyester, polyamide, polysiloxane, cellulose derivative, polyacetal, polystyrene derivative, poly(styrene-phenylmaleimide) derivative and poly(meth)acrylate. Out of these, a polyamic acid is preferred from the viewpoints of heat resistance and electric properties. The amount of the polymer having no specific structure is preferably 0 to 99 wt%, more preferably 10 to 90 wt%, particularly preferably 50 to 90 wt% of the total of all polymers contained in the liquid crystal aligning agent.

The liquid crystal aligning agent of the present invention may contain a thermosetting crosslinking agent to stabilize the pretilt angle and improve the strength of its coating film. A polyfunctional epoxy-containing compound is effective as the thermosetting crosslinking agent, as exemplified by bisphenol A epoxy resin, phenol novolak epoxy resin, cresol novolak epoxy resin, cyclic alphatic epoxy resin, glycidyl ester-based epoxy resin, glycidyl diamine-based epoxy resin, heterocyclic epoxy resin and epoxy group-containing acrylic resin. Commercially available products of the thermosetting crosslinking agent include Epolite 400E and 3002 (of Kyoeisha Yushi Kagaku Kogyo Co. Ltd.) and Epicoat 828 and 152 and Epoxy Novolak 180S (of Yuka Shell Epoxy Co., Ltd.).

Further, when the above polyfunctional epoxy-containing compound is used, a basic catalyst such as 1-benzyl-2-methylimidazole may be added to cause a crosslinking reaction efficiently.

The liquid crystal aligning agent of the present invention may contain a functional silane-containing compound to improve adhesion to a substrate. Examples of the functional silane-containing compound include
3-aminopropyltrimethoxysilane,
3-aminopropyltriethoxysilane,
2-aminopropyltrimethoxysilane,
2-aminopropyltriethoxysilane,
N-(2-aminoethyl)-3-aminopropyltrimethoxysilane,
N-(2-aminoethyl)-3-aminopropylmethyldimethoxysilane,
3-ureidopropyltrimethoxysilane,
3-ureidopropyltriethoxysilane,
N-ethoxycarbonyl-3-aminopropyltrimethoxysilane,
N-ethoxycarbonyl-3-aminopropyltriethoxysilane,
N-triethoxysilylpropyltriethylenetriamine,
N-trimethoxysilylpropyltriethylenetriamine,
10-trimethoxysilyl-1,4,7-triazadecane,
10-triethoxysilyl-1,4,7-triazadecane,
9-trimethoxysilyl-3,6-diazanonylacetate,
9-triethoxysilyl-3,6-diazanonylacetate,
N-benzyl-3-aminopropyltrimethoxysilane,
N-benzyl-3-aminopropyltriethoxysilane,
N-phenyl-3-aminopropyltrimethoxysilane,
N-phenyl-3-aminopropyltriethoxysilane,
N-bis(oxyethylene)-3-aminopropyltrimethoxysilane and
N-bis(oxyethylene)-3-aminopropyltriethoxysilane.
Further, reactions product of a tetracarboxylic dianhydride and an amino group-containing silane compound as disclosed by JP-A 63-291922 may also be used.

### Liquid crystal alignment film

The following method may be employed to form a liquid crystal alignment film by using the liquid crystal aligning agent of the present invention. The liquid crystal aligning agent of the present invention is applied to the transparent conductive film side of a substrate having a transparent conductive film by roll coating, spinner coating, printing or ink jet coating and heated at a temperature of, for example, 40 to 200°C to form a coating film. The thickness of the coating film is preferably 0.001 to 1 µm, more preferably 0.005 to 0.5 µm as solid matter.

As the above substrate may be used a transparent substrate made of glass such as float glass or soda lime glass, or composed of a plastic film such as polyethylene terephthalate, polybutylene terephthalate, polyether sulfone or polycarbonate film.

As the above transparent conductive film may be used a NESA film made of SnO₂ or an ITO film made of In₂O₃-SnO₂. Photoetching or a technique using a mask may be employed for the patterning of the transparent conductive film.

Before the application of the liquid crystal aligning agent, a functional silane-containing compound or titanate may be applied to the substrate and the transparent conductive film to further improve adhesion between the substrate/transparent conductive film and the coating film.

Thereafter, linearly polarized or partially polarized radiation, or non-polarized radiation is applied to the coating film and further a heat treatment is carried out at 150 to 250°C according to circumstances to provide liquid crystal alignability. Ultraviolet radiation and visible radiation having a wavelength of 150 to 800 nm may be used as the radiation but ultraviolet radiation having a wavelength of 300 to 400 nm is preferred. When the used radiation is linearly polarized or partially polarized, irradiation may be carried out in a direction perpendicular to the surface of the substrate or in an oblique direction to provide a pretilt angle. Or, they may be combined. When non-polarized radiation is applied, the application direction must be an oblique direction.

As the light source may be used a low-pressure mercury lamp, high-pressure mercury lamp, deuterium lamp, metal halide lamp, argon resonance lamp, xenon lamp or excimer laser. Ultraviolet radiation having the above preferred wavelength range can be obtained by means using a filter, a diffraction grating and one of the above light sources.

The term "pretilt angle" as used herein means the inclination angle of a liquid crystal molecule from a direction parallel to the surface of the substrate.

### Liquid crystal display device

A liquid crystal display device formed by using the liquid crystal aligning agent of the present invention is manufactured as follows. Two substrates having the above liquid crystal alignment film thereon are prepared and opposed to each other in such a manner that the polarization directions of linearly polarized radiations applied to the liquid crystal alignment films form a predetermined angle, the peripheral portion of a space between the two substrates is sealed up with a sealing agent, the space is filled with liquid crystals, and a filling hole is sealed to construct a liquid crystal cell. Thereafter, it is desired that this liquid crystal cell should be heated to a temperature at which the used liquid crystals take an isotropic phase and cooled to room temperature to remove flow alignment at the time of injection.

A polarizer is put on the both sides of the liquid crystal cell such that the polarization direction of the polarizer and the alignment facilitating axis of the liquid crystal alignment film of each of the substrates form a predetermined angle to manufacture a liquid crystal display device. When the liquid crystal alignment film has homogeneous alignability, a liquid crystal display device having a TN or STN liquid crystal cell can be obtained by adjusting the angle between the polarization directions of linearly polarized radiations applied to the two substrates having the liquid crystal alignment film thereon and the angles between the substrates and the polarizers. When the liquid crystal alignment film has homeotropic alignability, a cell is constructed such that the directions of the easy axis of the two substrates having the liquid crystal alignment film thereon become parallel to each other, and a polarizer is put on the both sides of the cell such that its polarization direction and the easy axis form an angle of 45° to manufacture a liquid crystal display device having a homeotropic alignment type liquid crystal cell.

The above sealing agent is, for example, an epoxy resin containing a curing agent and aluminum oxide spheres as a spacer.

The above liquid crystals are, for example, nematic liquid crystals or smectic liquid crystals. In the case of a TN liquid crystal cell and an STN liquid crystal cell, liquid crystals having positive dielectric anisotropy for forming nematic liquid crystals are preferred, as exemplified by biphenyl-based liquid crystals, phenylcyclohexane-based liquid crystals, ester-based liquid crystals, terphenyl-based liquid crystals, biphenylcyclohexane-based liquid crystals, pyrimidine-based liquid crystals, dioxane-based liquid crystals, bicyclooctane-based liquid crystals and cubane-based liquid crystals. Cholesteric liquid crystals such as cholesteryl chloride, cholesteryl nonanoate or cholesteryl carbonate and a chiral agent which is marketed under the trade name of C-15 or CB-15 (of Merk Co., Ltd.) may further be added to the above liquid crystals. Further, ferroelectric liquid crystals such as p-decyloxybenzilidene-p-amino-2-methylbutylcinnamate may also be used. In the case of a homeotropic alignment type liquid crystal cell, liquid crystals having negative dielectric anisotropy for forming nematic liquid crystals are preferred, as exemplified by dicyanobenzene-based liquid crystals, pyridazine-based liquid crystals, Schiff base-based liquid crystals, azoxy-based liquid crystals, biphenyl-based liquid crystals and phenylcyclohexane-based liquid crystals.

The polarizing plate used on the outer surfaces of the liquid crystal cells may be a polarizing film, so-called H film, which is prepared by stretching and aligning polyvinyl alcohol while allowing it to absorb iodine, a polarizing plate which includes a protected H film obtained by sandwiching an H film by cellulose acetate films, and the like.

As described above, when the optical aligning agent of the present invention is used, a liquid crystal alignment film can be obtained with a smaller dose of radiation than that of the optical aligning method of the prior art.
Therefore, when this liquid crystal alignment film is used in a liquid crystal display device, the liquid crystal display device can be manufactured at a lower cost than in the prior art. Consequently, this liquid crystal display device can be effectively used in various types of equipment such as desk-top calculators, wristwatches, clocks, counter displays, word processors, personal computers and liquid crystal TVs.

### Examples

The following examples are provided for the purpose of further illustrating the present invention but are in no way to be taken as limiting. The pretilt angle, voltage retention and retardation in examples and comparative examples were evaluated by the following methods.

### [pretilt angle]

This was measured by a crystal rotation method using a He-Ne laser beam in accordance with the method disclosed byT.J. Scheffer et al. J. Appl. Phys. Vol. 19, p.2013 (1980).

### [liquid crystal alignability]

The existence of an abnormal domain was checked by a polarization microscope when a liquid crystal display device was turned on and off (application and cancellation of voltage). When there was no abnormal domain, the liquid crystal display was judged as "acceptable".

### [voltage holding ratio]

After a voltage of 5 V was applied to the liquid crystal display device for an application time of 60 µs and a span of 167 ms, the voltage holding ratio was measured 167 ms after the cancellation of voltage application. The VHR-1 of Toyo Technica Co., Ltd. was used as a measuring instrument. When the voltage holding ratio was 90 % or more, the liquid crystal display device was judged as acceptable and in other cases, it was judged as defective.

### Synthesis example 1

### Polymerization of polyamic acid

0.1 mol (22.4 g) of 2, 3, 5-tricarboxycyclopentylacetic dianhydride and 78.1 g of 2-(oryzanyloxy)ethyl(3,5-diaminobenzoate) which was synthesized from natural γ-oryzanol by the method disclosed by Japanese Patent Application No. 2006-13115 were dissolved in 400 g of N-methyl-2-pyrrolidone and reacted with each other at 60°C for 6 hours. Thereafter, the reaction mixture was injected into an excessive amount of methanol to precipitate a reaction product. The reaction product was then washed with methanol and dried at 40°C under reduced pressure for 15 hours to obtain 99 g of a polyamic acid (to be referred to as "polymer 1a" hereinafter).

### Imidization reaction

380 g of N-methyl-2-pyrrolidone, 3.2 g of pyridine and 4. 08 g of acetic anhydride were added to 20.1 g of the polymer 1a to carry out an imidization reaction at 120°C for 4 hours. Thereafter, the reaction mixture was injected into an excessive amount of methanol to precipitate a reaction product. The reaction product was then washed with methanol and dried under reduced pressure for 15 hours to obtain 19 g of a polyimide (to be referred to as "polymer 1b" hereinafter).

### Synthesis Example 2

### Polymerization of polyamic acid

104 g of a polyamic acid (to be referred to as "polymer 2a" hereinafter) was obtained in the same manner as in Synthesis Example 1 except that 83.7 g of 6-(oryzanyloxy)hexyl(3,5-diaminobenzoate) synthesized likewise was used in place of 0.1 mol (78.1 g) of 2-(oryzanyloxy)ethyl(3,5-diaminobenzoate).

### Imidization reaction

20 g of a polyimide (to be referred to as "polymer 2b" hereinafter) was obtained in the same manner as in Synthesis Example 1 except that 21.2 g of the polymer 2a was used in place of 20.1 g of the polymer 1a.

### Synthesis Example 3

### Polymerization of polyamic acid

102 g of a polyamic acid (to be referred to as "polymer 3a" hereinafter) was obtained in the same manner as in Synthesis Example 1 except that 80.9 g of 1,3-diamino-4-(6(oryzanyloxy)hexyloxy)benzene synthesized likewise was used in place of 0.1 mol (78.1 g) of 2-(oryzanyloxy)ethyl(3,5-diaminobenzoate).

### Imidization reaction

19 g of a polyimide (to be referred to as "polymer 3b" hereinafter) was obtained in the same manner as in Synthesis Example 1 except that 20.7 g of the polymer 3a was used in place of 20.1 g of the polymer 1a.

### Synthesis Example 4

### Polymerization of polyamic acid

97 g of a polyamic acid (to be referred to as "polymer 4a" hereinafter) was obtained in the same manner as in Synthesis Example 1 except that 76.7 g of oryzanyloxy(2(2,4-diaminophenoxy)acetate) synthesized from natural γ-oryzanol was used in place of 0.1 mol (78.1 g) of 2-(oryzanyloxy)ethyl(3,5-diaminobenzoate).

### Imidization reaction

18 g of a polyimide (to be referred to as "polymer 4b" hereinafter) was obtained in the same manner as in Synthesis Example 1 except that 19.5 g of the polymer 4a was used in place of 20.1 g of the polymer 1a.

### Synthesis Example 5

### Polymerization of polyamic acid

85 g of a polyamic acid (to be referred to as "polymer 5a" hereinafter) was obtained in the same manner as in Synthesis Example 1 except that 74.0 g of oryzanyl(3,5-diaminobenzoate) synthesized from natural γ-oryzanol by the method disclosed by JP-A 2006-13115 was used in place of 0.1 mol (78.1 g) of 2-(oryzanyloxy)ethyl(3,5-diaminobenzoate).

### Imidization reaction

17 g of a polyimide (to be referred to as "polymer 5b" hereinafter) was obtained in the same manner as in Synthesis Example 1 except that 18.9 g of the polymer 5a was used in place of 20.1 g of the polymer 1a.

### Synthesis Example 6

### Polymerization of polyamic acid

70 g of a polyamic acid (to be referred to as "polymer 6a" hereinafter) was obtained in the same manner as in Synthesis Example 4 except that 38.4 g of oryzanyloxy(2(2,4-diaminophenoxy)acetate and 0.05 mol (5.4 g) of p-phenylenediamine were used in place of 0.1 mol (78.1 g) of 2-(oryzanyloxy)ethyl(3,5-diaminobenzoate).

### Imidization reaction

13 g of a polyimide (to be referred to as "polymer 6b" hereinafter) was obtained in the same manner as in Synthesis Example 1 except that 14.3 g of the polymer 6a was used in place of 20.1 g of the polymer 1a.

### Synthesis Example 7

### Polymerization of polyamic acid

69 g of a polyamic acid (to be referred to as "polymer 7a" hereinafter) was obtained in the same manner as in Synthesis Example 6 except that 37.0 g of oryzanyloxy(3,5-diaminobenzoate) was used in place of 38.4 g of oryzanyloxy(2(2,4-diaminophenoxy)acetate).

### Imidization reaction

13 g of a polyimide (to be referred to as "polymer 7b" hereinafter) was obtained in the same manner as in Synthesis Example 1 except that 14.0 g of the polymer 6a was used in place of 20.1 g of the polymer 1a.

### Synthesis Example 8

### Polymerization of polyamic acid

59 g of a polyamic acid (to be referred to as "polymer 8a" hereinafter) was obtained in the same manner as in Synthesis Example 7 except that 0.1 mol (19.6 g) of 1,2,3,4-cyclobutanetetracarboxylic dianhydride was used in place of 0.1 mol (22.4 g) of 2,3,5-tricarboxycyclopentylacetic dianhydride to carry out a polymerization reaction at room temperature.

### Synthesis Example 9

### Polymerization of polyamic acid

0.1 mol (31.3 g) of 1, 3, 3a, 4, 5, 9b-hexahydro-5-(tetrahydro-2,5-dioxo-3-furanyl)-8-methyl-naphtho[1,2-c]-furan-1,3-dione, 0.04 mol (29.6 g) of oryzanyloxy(3,5-diaminobenzoate) synthesized from natural γ-oryzanol by the method disclosed by JP-A 2006-13115 and 0. 06 mol (6.5 g) of p-phenylenediamine were dissolved in 400 g of N-methyl-2-pyrrolidone and reacted with one another at room temperature for 24 hours. Thereafter, the reaction mixture was injected into an excessive amount of methanol to precipitate a reaction product. The reaction product was then washed with methanol and dried at 40°C under reduced pressure for 15 hours to obtain 64 g of a polyamic acid (to be referred to as "polymer 9a" hereinafter).

### Imidization reaction

12 g of a polyimide (to be referred to as "polymer 9b" hereinafter) was obtained in the same manner as in Synthesis Example 1 except that 13.5 g of the polymer 9a was used in place of 20.1 g of the polymer 1a.

### Synthesis Example 10

### Polymerization of polyamic acid

0.1 mol (22.4 g) of 2,3,5-tricarboxycyclopentylacetic dianhydride and 0.1 mol (10.8 g) of p-phenylenediamine were dissolved in 300 g of N-methyl-2-pyrrolidone and reacted with each other at 60°C for 6 hours. Thereafter, the reaction mixture was injected into an excessive amount of methanol to precipitate a reaction product. The reaction product was then washed with methanol and dried at 40°C under reduced pressure for 15 hours to obtain 27.4 g of a polyamic acid (to be referred to as "polymer Aa" hereinafter).

### Synthesis of polyamic acid ester

350 g of N-methyl-2-pyrrolidone, 77.4 g of 4-(6-bromohexyloxy)-4'-(3-cholestanyloxy)chalcone and 13.8 g of potassium carbonate were added to 16.6 g of the polymer 1a and reacted with one another at 120°C for 4 hours. Thereafter, the reaction mixture solution was injected into water to precipitate a reaction product. The obtained precipitate was washed with water and dried under reduced pressure for 15 hours to obtain 85 g of a polyamic acid ester (to be referred to as "polymer 10b" hereinafter).

### Synthesis Example 11

1.0 mol (196.12 g) of 1,2,3,4-cyclobutanetetracarboxylic dianhydride and 1.0 mol (212.3 g) of 2,2'-dimethyl-4,4'-diaminobiphenyl were dissolved in 4,500 g of N-methyl-2-pyrrolidone and reacted with each other at 40°C for 3 hours. Thereafter, the reaction solution was injected into an excessive amount of methanol to precipitate a reaction product. The reaction product was then washed with methanol and dried at 40°C under reduced pressure for 15 hours to obtain 390 g of a polyamic acid (to be referred to as "polymer Ba" hereinafter).

### Comparative Synthesis Example

### Imidization reaction

380 g of N-methyl-2-pyrrolidone, 9.5 g of pyridine and 12.3 g of acetic anhydride were added to 20. 0 g of the polymer Aa to carry out an imidization reaction at 120°C for 4 hours. Thereafter, the reaction mixture solution was injected into an excessive amount of methanol to precipitate a reaction product. The reaction product was then washed with methanol and dried under reduced pressure for 15 hours to obtain 15.3 g of a polyimide (to be referred to as polymer "Ab" hereinafter).

### Reference Example 1

The polymer Ab obtained in Comparative Synthesis Example was dissolved in N-methyl-2-pyrrolidone to prepare a solution having a solid content of 2.5 wt% which was then filtered with a filter having an opening diameter of 1 µm to prepare a liquid crystal aligning agent (to be referred to as "liquid crystal aligning agent P" hereinafter). This solution was applied to the transparent electrode side of a glass substrate having a transparent electrode composed of an ITO film to a thickness of 0.1 µm with a spinner and dried at 180°C for 1 hour to form a thin film. This thin film was rubbed by a rubbing machine having a roll wound with nylon cloth at a roll revolution of 500 rpm and a stage moving speed of 1 cm/sec. Then, the liquid crystal alignment film formed sides of a pair of substrates which had been rubbed as described above were coated with an epoxy resin adhesive containing aluminum oxide spheres having a diameter of 5.5 µm by screen printing, the substrates were contact bonded to each other in such a manner that their rubbing directions became parallel to each other and opposite to each other, and the adhesive was thermally cured at 150°C for 1 hour. After nematic liquid crystals (ZLI-1565 of Merk Co., Ltd.) were filled into the space between the pair of substrates from a liquid crystal injection port, the liquid crystal injection port was sealed with an epoxy-based adhesive. Further, to remove flow alignment at the time of injecting the liquid crystals, the assembly was heated at 150°C and cooled to room temperature gradually. Thereafter, a polarizer was put on the exterior sides of the substrates in such a manner that their polarization directions became perpendicular to each other and formed an angle of 45° from the rubbing directions of the liquid crystal alignment films to manufacture a liquid crystal display device. This liquid crystal display device had high liquid crystal alignability. When a voltage of 5 V was applied, a change in the brightness of the liquid crystal display device in response to ON-OFF of voltage applied thereto was observed. The pretilt angle of the liquid crystal cell was 0.5°C, and the voltage retention was judged as satisfactory.

### Examples 1 to 8

The polymers 1a to 6a obtained in Synthesis Examples 1 to 6 were dissolved in a mixed solvent of N-methyl-2-pyrrolidone in weight ratios shown in Table 1 and butyl cellosolve (weight ratio of 60/40) to prepare solutions having a solid content of 2.5 wt% which were then filtered with a filter having an opening diameter of 1 µm to prepare liquid crystal aligning agents B-1 to B-8.

**Table 1**

| Example | Liquid crystal aligning agent | Polymer | Additive | Amount of additive (based on 100 parts by weight of the polymer) |
|---|---|---|---|---|
| 1 | B-1 | 1a | None | - |
| 2 | B-2 | 2a | None | - |
| 3 | B-3 | 3a | None | - |
| 4 | B-4 | 4a | None | - |
| 5 | B-5 | 4a | E-1 | 30 |
| 6 | B-6 | 4a | E-2 | 30 |
| 7 | B-7 | 5a | None | - |
| 8 | B-8 | 6a | None | - |

| | | | | |
|---|---|---|---|---|
| Additives in Table 1 are given below. E-1: N,N,N',N'-tetraglycidyl-4,4'-diaminodiphenylmethane E-2: bisphenol A diglycidyl ether | | | | |

Thereafter, a thin film was formed on a substrate in the same manner as in Reference Example 1 except that each of the liquid crystal aligning agents B-1 to B-8 was used in place of the liquid crystal aligning agent P. 0.1 J/cm² of polarized ultraviolet radiation including a 313 nm bright line was applied to the surface of this thin film at 40° from the normal of the substrate by using a Hg-Xe lamp and a Glan-Taylor prism. When a liquid crystal display device was manufactured in the same manner as in Reference Example 1 except that the substrates and the polarizers were assembled together in the projection direction on the surface of the substrate of the optical axis of ultraviolet radiation in place of the rubbing direction and the MLC-6608 liquid crystals of Merk Co. , Ltd. were used in place of the ZLI-1565 liquid crystals of Merk Co., Ltd., the homeotropic alignability of the liquid crystals was high. When voltage was applied on the same condition as in Reference Example 1, a change in the brightness of the liquid crystal display device in response to ON-OFF of voltage applied thereto was observed.

The pretilt angles and voltage retentions of these liquid crystal display devices are shown in Table 2.

**Table 2**

| Example | Pretilt angle | Voltage holding ratio |
|---|---|---|
| 1 | 88° | Acceptable |
| 2 | 89° | Acceptable |
| 3 | 88° | Acceptable |
| 4 | 89° | Acceptable |
| 5 | 87° | Acceptable |
| 6 | 87° | Acceptable |
| 7 | 89° | Acceptable |
| 8 | 86° | Acceptable |

### Examples 9 to 17

The polymers 1b to 6b and 9b obtained in Synthesis Examples 1 to 6 and 9 were dissolved in a solvent in weight ratios shown in Table 3 to prepare solutions having a solid content of 2.5 wt% which were then filtered with a filter having an opening diameter of 1 µm to prepare liquid crystal aligning agents B-9 to B-17.

**Table 3**

| Example | Liquid crystal aligning agent | Polymer | Additive | Amount of additive (based on 100 parts by weight of the polymer) |
|---|---|---|---|---|
| 9 | B-9 | 1b | None | - |
| 10 | B-10 | 2b | None | - |
| 11 | B-11 | 3b | None | - |
| 12 | B-12 | 4b | None | - |
| 13 | B-13 | 4b | E-1 | 30 |
| 14 | B-14 | 4b | E-2 | 30 |
| 15 | B-15 | 5b | None | - |
| 16 | B-16 | 6b | None | - |
| 17 | B-17 | 9b | E-1 | 30 |

The symbols of the additives in Table 3 are as defined in Table 1.

Liquid crystal display devices were manufactured in the same manner as in Example 1 except that the liquid crystal aligning agents B-9 to B-17 were used in place of the liquid crystal aligning agent B-1. In all of the liquid crystal display devices, the homeotropic alignability of the liquid crystals was high. When voltage was applied on the same condition as in Reference Example 1, a change in the brightness of each of the liquid crystal display devices in response to ON-OFF of voltage applied thereto was observed. Therefore, liquid crystal alignability at the time of applying voltage was satisfactory.

The pretilt angles and voltage retentions of these liquid crystal display devices are shown in Table 4.

**Table 4**

| Example | Pretilt angle | Voltage holding ratio |
|---|---|---|
| 9 | 89° | Acceptable |
| 10 | 89° | Acceptable |
| 11 | 89° | Acceptable |
| 12 | 89° | Acceptable |
| 13 | 87° | Acceptable |
| 14 | 88° | Acceptable |
| 15 | 89° | Acceptable |
| 16 | 86° | Acceptable |
| 17 | 89° | Acceptable |

### Examples 18 to 26

The polymers 1b to 7b and 9b obtained in Synthesis Examples 1 to 7 and 9 and the polymers Aa and Ba obtained in Synthesis Examples 10 and 11 were dissolved in a solvent in weight ratios shown in Table 5 to prepare solutions having a solid content of 2.5 wt% which were then filtered with a filter having an opening diameter of 1 µm to prepare liquid crystal aligning agents B-18 to B-26.

**Table 5**

| Example | Liquid crystal aligning agent | Polymer | | Additive |
|---|---|---|---|---|
| 18 | B-18 | 1b(20) | Aa(80) | E-2(20) |
| 19 | B-19 | 2b(20) | Aa(80) | None |
| 20 | B-20 | 3b(20) | Ba(80) | None |
| 21 | B-21 | 4b(20) | Aa(80) | E-1(20) |
| 22 | B-22 | 4b(20) | Ba(80) | E-2(30) |
| 23 | B-23 | 5b(20) | Aa(80) | None |
| 24 | B-24 | 6b(20) | Aa(70) | None |
| 25 | B-25 | 7b(20) | Ba(80) | E-1(20) |
| 26 | B-26 | 9b(20) | Ba(80) | None |

In Table 5, the numerical values within the parentheses show the number of parts by weight of each component. The symbols for the additives are as defined in Table 1.

Liquid crystal display devices were manufactured in the same manner as in Example 1 except that the liquid crystal aligning agents B-18 to B-26 were used in place of the liquid crystal aligning agent B-1. In all of the liquid crystal display devices, the homeotropic alignability of the liquid crystals was high. When voltage was applied on the same condition as in Reference Example 1, a change in the brightness of each of the liquid crystal display devices in response to ON-OFF of voltage applied thereto was observed. Therefore, liquid crystal alignability at the time of applying voltage was satisfactory.

The pretilt angles and voltage retentions of these liquid crystal display devices are shown in Table 6.

**Table 6**

| Example | Pretilt angle | Voltage holding ratio |
|---|---|---|
| 18 | 89° | Acceptable |
| 19 | 89° | Acceptable |
| 20 | 89° | Acceptable |
| 21 | 89° | Acceptable |
| 22 | 89° | Acceptable |
| 23 | 89° | Acceptable |
| 24 | 89° | Acceptable |
| 25 | 89° | Acceptable |
| 26 | 89° | Acceptable |

### Example 27

The polymer 10b obtained in Synthesis Example 10 was dissolved in a mixed solvent of N-methyl-2-pyrrolidone and butyl cellosolve (weight ratio of 60/40) to prepare a solution having a solid content of 2.5 wt% which was then filtered with a filter having an opening diameter of 1 µm to prepare a liquid crystal aligning agent B-27.

A thin film was formed on a substrate in the same manner as in Example 1 except that the liquid crystal aligning agent B-27 was used in place of the liquid crystal aligning agent B-1. 0.1 J/cm² of polarized ultraviolet radiation including a 313 nm bright line was applied to the surface of this thin film at 40° from the normal of the substrate by using a Hg-Xe lamp and a Glan-Taylor prism. When a liquid crystal display device was manufactured in the same manner as in Example 1, the homeotropic alignability of the liquid crystals was high. When voltage was applied on the same condition as in Reference Example 1, a change in the brightness of the liquid crystal display device in response to ON-OFF of voltage applied thereto was observed.

The pretilt angle and voltage retention of this liquid crystal display device are shown in Table 7.

**Table 7**

| Example | Pretilt angle | voltage holding ratio |
|---|---|---|
| 27 | 89° | Acceptable |

### Examples 28 to 53

Liquid crystal display devices were manufactured in the same manners as in Examples 1 to 26 except that the application direction of the polarized ultraviolet radiation was changed to the normal direction of the substrate, a solution of 0.1 wt% of the Disperse Red dichroic dye dissolved in the MLC-6608 of Merk Co., Ltd. was used as liquid crystals in place of the MLC-6608 of Merk Co., Ltd. and a polarizer was not assembled. In all of the liquid crystal display devices, the homeotropic alignability of the liquid crystals was high. When voltage was applied on the same conditions as in Reference Example 1 and the liquid crystal display devices were observed through a polarization microscope, they were colored red only by polarization in a direction perpendicular to the polarization axis of polarized ultraviolet radiation. This result shows that the obtained alignment film had liquid crystal alignability in a direction perpendicular to the polarization axis of polarized ultraviolet radiation.

### Comparative Example 1

When a liquid crystal display device was manufactured in the same manner as in Example 1 except that the liquid crystal aligning agent P was used in place of the liquid crystal aligning agent B-1, liquid crystal alignability was not observed.

## Claims

1. A liquid crystal aligning agent comprising a polymer having in the side chain at least one structure selected from the group consisting of structures represented by the following formulas (I), (II), (III) and (IV):
-P¹-CR¹=CR²-CO-D¹-L¹-S¹ (I)
-P²-CR³=CR⁴-CO-Q²-L²-S² (II)
-D³-CO-CR⁵=CR⁶-P³-L³-S³ (III)
-Q⁴-CO-CR⁷=CR⁸-P⁴-L⁴-S⁴ (IV)
wherein P¹, P², P³, P⁴, Q² and Q⁴ are each independently a divalent aromatic group or unsaturated heterocyclic group which may be substituted by a halogen or organic group, D¹ and D³ are each independently an oxygen atom or NR (R is a hydrogen atom or alkyl group having 12 or less carbon atoms), S¹, S², S³ and S⁴ are each independently a monovalent organic group having a condensation alicyclic group having 11 to 30 carbon atoms, L¹, L², L³ and L⁴ are each independently a single bond or divalent bonded group, and R¹, R², R³, R⁴, R⁵, R⁶, R⁷ and R⁸ are each independently a hydrogen atom or alkyl group having 12 or less carbon atoms.

2. The liquid crystal aligning agent according to claim 1, wherein the main chain of the polymer is a polyamic acid or polyimide.

3. The liquid crystal aligning agent according to claim 1, wherein the main chain of the polymer is a polyamic acid ester.

4. A liquid crystal alignment film which is prepared by applying polarized or non-polarized radiation to a thin film made of the liquid crystal aligning agent of any one of claims 1 to 3 to make the thin film have liquid crystal alignability.

5. A liquid crystal display device having the liquid crystal alignment film according to claim 4.

## Patentansprüche

1. Flüssigkristallausrichtungsmittel, umfassend ein Polymer mit zumindest einer Struktur in der Seitenkette ausgewählt aus der Gruppe bestehend aus durch die folgenden Formeln (I), (II), (III) und (IV) dargestellten Strukturen:
-P¹-CR¹=CR²-CO-D¹-L¹-S¹ (I)
-P²-CR³=CR⁴-CO-Q²-L²-S² (II)
-D³-CO-CR⁵=CR⁶-P³-L³-S³ (III)
-Q⁴-CO-CR⁷=CR⁸-P⁴-L⁴-S⁴ (IV)
wobei P¹, P², P³, P⁴, Q² und Q⁴ jeweils unabhängig eine divalente aromatische Gruppe oder eine ungesättigte heterocyclische Gruppe sind, welche durch ein Halogen oder eine organische Gruppe substituiert sein können, D¹ und D³ jeweils unabhängig ein Sauerstoffatom oder NR sind (R ist ein Wasserstoffatom oder eine Alkylgruppe mit 12 oder weniger Kohlenstoffatomen), S¹, S², S³ und S⁴ jeweils unabhängig eine monovalente organische Gruppe mit einer Kondensations-alicyclischen-Gruppe mit 11 bis 30 Kohlenstoffatomen sind, L¹, L², L³ und L⁴ jeweils unabhängig eine Einfachbindung oder eine divalent gebundene Gruppe sind, und R¹, R², R³, R⁴, R⁵, R⁶, R⁷ und R⁸ jeweils unabhängig ein Wasserstoffatom oder eine Alkylgruppe mit 12 oder weniger Kohlenstoffatomen sind.

2. Flüssigkristallausrichtungsmittel nach Anspruch 1, wobei die Hauptkette des Polymers eine Polyamidsäure oder ein Polyimid ist.

3. Flüssigkristallausrichtungsmittel nach Anspruch 1, wobei die Hauptkette des Polymers ein Polyamidsäureester ist.

4. Flüssigkristallausrichtungsfilm, welcher durch Anwenden polarisierter oder nicht-polarisierter Strahlung auf einen dünnen Film, der aus dem Flüssigkristallausrichtungsmittel nach einem der Ansprüche 1 bis 3 hergestellt ist, angefertigt ist, um dem dünnen Film eine Flüssigkristallausrichtbarkeit zu verschaffen.

5. Flüssigkristallanzeigevorrichtung mit dem Flüssigkristallausrichtungsfilm nach Anspruch 4.

## Revendications

1. Agent d'alignement de cristaux liquides comprenant un polymère ayant dans la chaîne latérale au moins une structure choisie parmi le groupe consistant en des structures représentées par les formules (I), (II), (III) et (IV) suivantes :
-P¹-CR¹=CR²-CO-D¹-L¹-S¹ (I)
-P²-CR³=CR⁴-CO-Q²-L²-S² (II)
-D³-CO-CR⁵=CR⁶-P³-L³-S³ (III)
-Q⁴-CO-CR⁷=CR⁸-P⁴-L⁴-S⁴ (IV)
dans lesquelles P¹, P², P³, P⁴, Q² et Q⁴ sont chacun indépendamment un groupe aromatique divalent ou un groupe hétérocyclique insaturé qui peut être substitué par un halogène ou un groupe organique, D¹ et D³ sont chacun indépendamment un atome d'oxygène ou NR (R est un atome d'hydrogène ou un groupe alkyle ayant 12 atomes de carbone ou moins), S¹, S², S³ et S⁴ sont chacun indépendamment un groupe organique monovalent ayant un groupe alicyclique de condensation ayant 11 à 30 atomes de carbone, L¹, L², L³ et L⁴ sont chacun indépendamment une liaison simple ou un groupe lié divalent, et R¹, R², R³, R⁴, R⁵, R⁶, R⁷ et R⁸ sont chacun indépendamment un atome d'hydrogène ou un groupe alkyle ayant 12 atomes de carbone ou moins.

2. Agent d'alignement de cristaux liquides selon la revendication 1, dans lequel la chaîne principale du polymère est un acide polyamique ou un polyimide.

3. Agent d'alignement de cristaux liquides selon la revendication 1, dans lequel la chaîne principale du polymère est un ester d'acide polyamique.

4. Film d'alignement de cristaux liquides qui est préparé en appliquant un rayonnement polarisé ou non polarisé à un film mince constitué de l'agent d'alignement de cristaux liquides selon l'une quelconque des revendications 1 à 3 pour que le film mince ait une capacité d'alignement des cristaux liquides.

5. Dispositif d'affichage à cristaux liquides ayant le film d'alignement de cristaux liquides selon la revendication 4.
